Europäisches Patentamt

European Patent Office

Office européen des brevets

(19)

(11) Numéro de publication : **0 015 179**
**B1**

(12) **FASCICULE DE BREVET EUROPÉEN**

(45) Date de publication du fascicule du brevet :
**19.05.82**

(51) Int. Cl.³ : **B 60 R 21/10**, B 60 N   1/10

(21) Numéro de dépôt : **80400152.7**

(22) Date de dépôt : **31.01.80**

(54) Agencement de siège de véhicule automobile pourvu d'un dispositif d'accrochage pour ceintures de sécurité.

(30) Priorité : **21.02.79 FR 7904410**

(43) Date de publication de la demande :
**03.09.80 (Bulletin 80/18)**

(45) Mention de la délivrance du brevet :
**19.05.82 Bulletin 82/20**

(84) Etats contractants désignés :
**DE GB IT**

(56) Documents cités :
   **FR - A - 1 508 000**
   **FR - A - 2 208 361**
   **FR - A - 2 422 528**
   **US - A - 3 338 633**
   **US - A - 3 606 454**
   **US - A - 4 133 556**

(73) Titulaire : **AUTOMOBILES PEUGEOT**
**75, avenue de la Grande Armée**
**F-75116 Paris (FR)**

**SOCIETE ANONYME AUTOMOBILES CITROEN**
**117 à 167, Quai André Citroen**
**F-75747 Paris Cedex 15 (FR)**

(72) Inventeur : **Duguet, Pierre**
**15 Pré des Coulons**
**F-78810 Feucherolles (FR)**
Inventeur : **Robert, Christian**
**178, Av. du 18 juin 1940 Résidence la Lutéce**
**F-92500 Rueil Malmaison (FR)**

(74) Mandataire : **Moncheny, Michel et al**
**c/o Cabinet Lavoix 2 Place d'Estienne d'Orves**
**F-75441 Paris Cedex 09 (FR)**

Imprimerie Jouve, 18, rue St-Denis, 75001 Paris, France

Agencement de siège de véhicule automobile pourvu d'un dispositif d'accrochage pour ceintures de sécurité

La présente invention concerne un siège pouvant être transformé de manière à modifier le volume de chargement du compartiment à bagages d'un véhicule automobile. Elle s'applique plus précisément à un siège arrière dont le dossier est articulé à sa base sur l'arrière de l'assise, autour d'un premier axe transversal, l'assise étant elle-même articulée, au voisinage de sa partie avant, autour d'un second axe transversal.

Sur un véhicule ainsi équipé, on peut accroître le volume de chargement du compartiment à bagages en rabattant le dossier horizontalement sur l'assise, puis en relevant l'ensemble dossier-assise, à la verticale, derrière le dossier des sièges avant.

Lorsqu'un siège ainsi transformable doit être équipé d'une ceinture de sécurité pour chacune de ses places, il faut prévoir, pour chaque ceinture, un dispositif d'accrochage situé vers l'arrière de l'assise, au voisinage du plan médian longitudinal du véhicule. Pour éviter d'avoir à renforcer exagérément la structure du siège, il est souhaitable que ces dispositifs d'ancrage soient reliés au plancher du véhicule.

Il est, par exemple, possible de prévoir, dans l'assise, un passage pour des bras fixés directement sur le plancher et comportant chacun un organe d'accrochage pour une ceinture.

Cette disposition présente, notamment, les inconvénients suivants : les bras et leur organe d'accrochage frottent sur la garniture de l'assise à chaque manœuvre provoquant son usure ; il est malaisé de réintroduire les bras dans le passage de l'assise lorsque l'on replace celle-ci en position opérationnelle.

Suivant une autre conception, le dispositif d'accrochage de la ceinture est mobile avec le siège et des moyens sont prévus pour relier ce dispositif d'accrochage au plancher du véhicule lorsque le siège est en position d'utilisation (Demande de brevet FR-A-24-22-528).

L'invention se rapporte à cette dernière conception.

Elle a pour but de fournir un agencement particulièrement simple, ne nécessitant aucune intervention de la part de l'utilisateur au cours de la transformation du siège et garantissant une mise en place effective et sûre.

Elle a donc pour objet un agencement de siège de véhicule équipé d'un dispositif d'accrochage pour ceintures de sécurité et comprenant un dossier et une assise, le dossier étant articulé à sa base sur l'arrière de l'assise, autour d'un premier axe transversal, l'assise étant articulée au voisinage de sa partie avant autour d'un deuxième axe transversal, le dispositif d'accrochage étant fixe sur l'assise et des moyens de liaison étant prévus pour relier ce dispositif d'accrochage au plancher du véhicule, caractérisé en ce que lesdits moyens de liaison sont constitués par un pêne porté par le dispositif d'accrochage et une gâche montée pivotante sur le plancher, des moyens agissant en opposition à des moyens élastiques, étant prévus pour maintenir la gâche engagée sur le pêne lorsque le dossier est en position opérationnelle.

Deux exemples de réalisation de l'invention font l'objet de la description qui suit, en référence aux dessins joints dans lesquels :

La Figure 1 est une vue en perspective d'un siège muni d'un dispositif d'accrochage, suivant un premier mode de réalisation de l'invention ;

La Figure 2 est un détail agrandi de la Fig. 1 ;

Les Figures 3 et 4 sont des vues à plus grande échelle, prises suivant les flèches 3 et 4 de la Fig. 1, le siège étant en position opérationnelle ;

Les Figures 5 et 6 correspondent respectivement aux Fig. 3 et 4, le dossier étant rabattu sur l'assise ;

Les Figures 7 et 8 sont relatives à un second mode de réalisation de l'invention et correspondent respectivement aux Fig. 3 et 5.

On décrira d'abord le premier mode de réalisation de l'invention :

Un siège arrière de véhicule est constitué, principalement, par un dossier 1, muni d'une armature 2, et une assise 3, munie d'une armature 4. Le dossier 1 est articulé à sa base sur l'arrière de l'assise 3, autour d'un premier axe transversal X, tandis que l'assise est articulée, à sa partie avant, sur le plancher 5 du véhicule autour d'un second axe transversal Y.

Des moyens de verrouillage, bien connus et non représentés, maintiennent de façon habituelle, le dossier 1 en position normale d'utilisation.

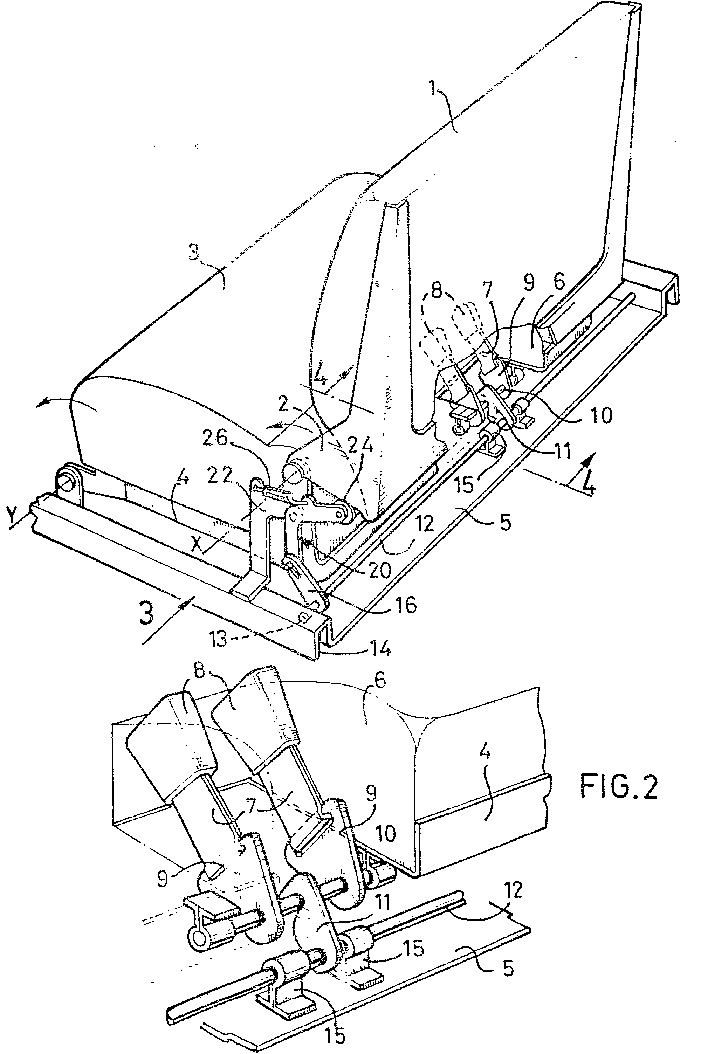

Comme le montre la Fig. 2, au voisinage de la partie arrière médiane de l'assise 3 est prévu un évidement 6 pour le passage de bras 7 munis chacun d'un organe d'accrochage 8 pour une ceinture de sécurité, non représentée.

Chaque bras est relié à une platine 9 et les deux platines sont portées par une barre 10, solidaire de l'armature 4 de l'assise, et disposée dans l'évidement 6, transversalement par rapport au véhicule.

La barre 10 constitue un pêne destiné à coopérer avec une gâche 11 solidaire d'une tringle transversale 12 montée rotative par rapport au plancher 5. Cette tringle est maintenue en place, à ses extrémités, dans des logements 13 formés sur des nervures 14 du plancher et, au voisinage de sa partie centrale, dans des pontets 15 situés de part et d'autre et à proximité immédiate de la gâche 11.

Sur l'une des extrémités de la tringle 12 est fixé un levier 16 muni d'un orifice oblong 17 dans lequel est engagé un doigt 18 porté par un premier bras 19 d'un levier 20. Ce dernier est articulé sur un axe 21 porté par un support 22 fixé sur le plancher 5.

Un deuxième bras 23 du levier 20 porte un galet 24 destiné à coopérer avec une rampe 25 formée sur l'armature 2 du dossier 1.

Un ressort 26 disposé entre le levier 20 et le support 22 tend à appliquer le galet 24 contre la rampe 25.

L'agencement qui vient d'être décrit fonctionne de la façon suivante :

Lorsque le siège est en position normale d'utilisation, comme représenté sur la Fig. 1, la rampe 25 de l'armature 2 appuie sur le levier 20, à l'encontre de l'action du ressort 26. Le levier 20 maintient alors le levier 16 dans une position telle que la gâche 11 est engagée sur le pêne 10 : en cas de traction exercée par la ceinture de sécurité, l'effort correspondant est transmis au plancher 5, par l'intermédiaire du bras 7, de la platine 9, du pêne 10, de la tringle 12 et des pontets 15.

Dès que l'on rabat le dossier 1 sur l'assise 3, le levier 20, libéré de la rampe 25, est entraîné par le ressort 26 ce qui provoque la rotation de la tringle 12 et le dégagement de la gâche 11 hors du pêne 10. Il est alors possible de relever l'assise 3, par pivotement autour de l'axe Y.

La remise en place du siège entraîne les opérations inverses sans qu'il y ait à se préoccuper du dispositif d'accrochage de la ceinture.

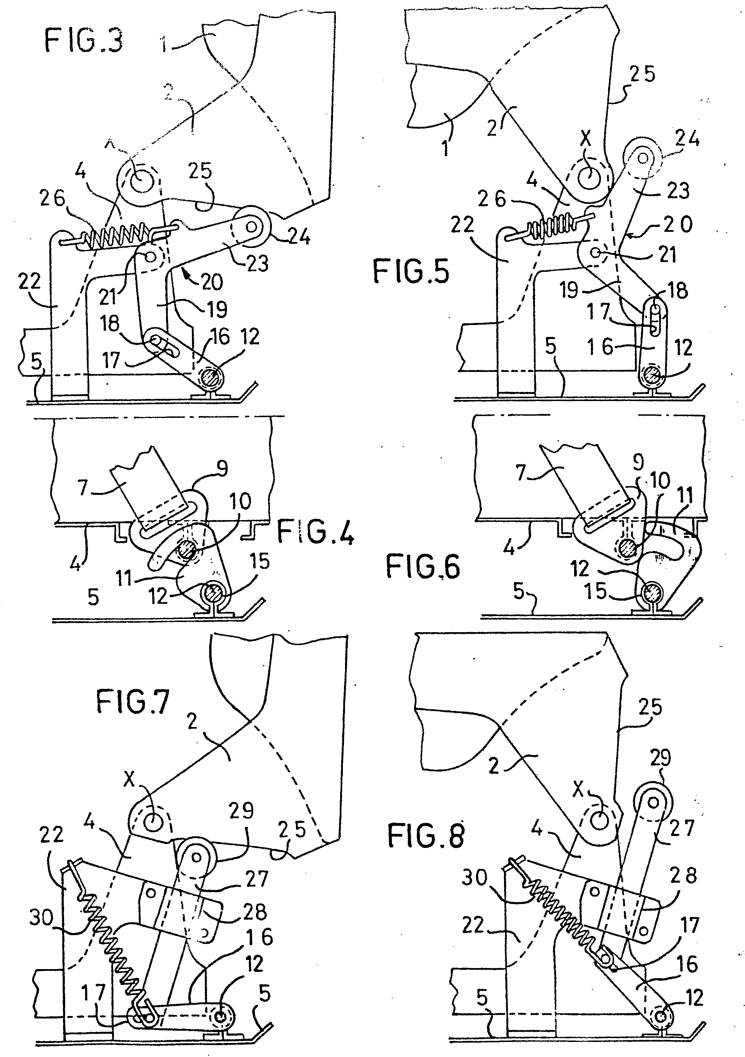

La variante représentée partiellement sur les Fig. 7 et 8 ne diffère de la précédente que par le fait que le levier articulé 20 est remplacé par un levier 27 monté à coulissement dans un guide 28 qui fait partie du support 22. Comme dans le mode de réalisation précédent, le levier 27 est articulé à une extrémité sur le levier 16 et porte à son extrémité opposée un galet 29 destiné à coopérer avec une rampe analogue à la rampe 25 du dispositif de la Fig. 3. Un ressort 30 ayant la même fonction que le ressort 26 est monté entre le support 22 et l'articulation du second levier sur le premier. Le fonctionnement de ce dispositif est le même que celui du premier mode de réalisation.

**Revendications**

1. Agencement de siège de véhicule équipé d'un dispositif d'accrochage (8) pour ceintures de sécurité et comprenant un dossier (1) et une assise (3), le dossier étant articulé à sa base sur l'arrière de l'assise, autour d'un premier axe transversal (X), l'assise étant articulée au voisinage de sa partie avant autour d'un deuxième axe transversal (Y), le dispositif d'accrochage (8) étant fixé sur l'assise et des moyens de liaison étant prévus pour relier ce dispositif d'accrochage au plancher du véhicule, caractérisé en ce que lesdits moyens de liaison sont constitués par un pêne (10) porté par le dispositif d'accrochage et une gâche (11) montée pivotante sur le plancher (5), des moyens (16, 20, 24 ; 16, 27, 29), agissant à l'encontre de l'action de moyens élastiques (26, 30), étant prévus pour maintenir la gâche (11) sur le pêne lorsque le dossier (1) est en position opérationnelle.

2. Agencement de siège suivant la revendication 1, dans lequel le dispositif d'accrochage (8) est disposé dans un évidement ménagé dans la partie arrière médiane de l'assise (3), caractérisé en ce que ledit pêne desdits moyens de liaison est constitué par une barre (10) solidaire de l'armature (4) de l'assise et disposée dans l'évidement (6), transversalement par rapport au véhicule.

3. Agencement de siège suivant les revendications 1 et 2, prises ensemble, caractérisé en ce que ladite gâche (11) est solidaire d'une tringle transversale (12) montée rotative par rapport au plancher (5), lesdits moyens de maintien de la gâche (11) comportant un premier levier (16) fixé à une extrémité de ladite tringle (12) et sur lequel est articulé un second levier (20 ; 27) portant à son extrémité opposée à son articulation, un galet (24, 29) destiné à coopérer avec une rampe (25) formée sur l'armature (2) du dossier.

4. Agencement de siège suivant la revendication 3, caractérisé en ce que ledit second levier (20) comporte un premier bras (19) articulé sur un axe (21) porté par un support (22) fixé sur le plancher (5) et un deuxième bras (23) portant ledit galet (24) et en ce que lesdits moyens élastiques sont constitués par un ressort (26) disposé entre ledit second levier (20) et ledit support (22).

5. Agencement de siège suivant la revendication 3, caractérisé en ce que ledit second levier (27) est monté à coulissement dans un guide (28) qui fait partie d'un support (22) fixé sur le plancher (5) et en ce que lesdits moyens élastiques sont constitués par un ressort (30) disposé entre l'articulation dudit second levier (27) et ledit support (22).

6. Agencement de siège suivant l'une quelconque des revendications 2 à 5, caractérisé en ce que le dispositif d'accrochage pour ceintures de sécurité comporte, pour chaque ceinture, un bras (7) muni d'un organe d'accrochage (8) et relié à une platine (9) correspondante, lesdites platines (9) étant portées par ladite barre (10) formant pêne.

**Claims**

1. Vehicle seat arrangement provided with a hooking device (8) for safety belts and comprising a backrest (1) and a seat (3), the backrest being mounted at the base thereof on a rear part of the seat to pivot about a first transverse axis (X), the seat being mounted on the floor in the vicinity of the front part of the seat to pivot about a second transverse axis (Y), the hooking device (8) being fixed to the seat and connecting means being provided for connecting the hooking device to the floor, characterized in that said connecting means comprise a latch (10) carried by the hooking device and a keeper (11) pivotally mounted on the floor (5), means (16, 20, 24 ; 16, 27, 29) operating in opposition to elastically yieldable means (26, 30) being provided for maintaining the keeper (11) engaged with the latch when the backrest is in its operative position.

2. Seat arrangement as claimed in claim 1, wherein the hooking device (8) is disposed in a recess defined in the rear median part of the seat (3), characterized in that said latch comprises a rod (10) which is rigid with the reinforcement (4) of the seat and extends across the recess (6), transversely of the vehicle.

3. Seat arrangement as claimed in claim 2, characterized in that said keeper (11) is rigid with a transverse rod (12) which is rotatively mounted relative to the floor (5), said means for holding the keeper (11) comprising a first lever (16) fixed adjacent one end of said rod (12), and on which a second lever (20 ; 27) is pivotally mounted, said second lever carrying a roller (24 ; 29) at its end opposed to its pivotal mounting, said roller engaging a ramp (25) carried on the reinforcement (2) of the backrest.

4. Seat arrangement as claimed in claim 3, characterized in that said second lever (20) comprises a first arm (19) pivotally mounted on a pin (21) carried by a support (22) fixed to the floor (5) and a second arm (23) carrying said roller (24), said elastically yieldable means comprising a spring (26) which is disposed between said second lever (20) and said support (12).

5. Seat arrangement as claimed in claim 3, characterized in that said second lever (27) is slidably mounted in a guide (28) defined by a support (22) fixed to the floor (5) and said elastically yieldable means comprise a spring (30) which is disposed between the pivotal mounting of said second lever (27) and said support (22).

6. Seat arrangement as claimed in any one of the claims 2 to 5, characterized in that the hooking device for safety belts comprises, for each belt, an arm (7) provided with hooking means (8) and connected to a corresponding plate (9), said plates (9) being carried by said rod (10) which forms a latch.


**Ansprüche**


1. Fahrzeugsitzanordnung mit einer Halterung (8) für Sicherheitsgurte, mit einer Lehne (1) und mit einem Sitzunterteil (3), wobei die Lehne an ihrer Basis am Hinterteil des Sitzunterteils an einer ersten Querachse (X) angelenkt ist, wobei das Sitzunterteil in Nähe seiner Vorderteils an einer zweiten Querachse (Y) angelenkt ist, wobei die Halterung (8) am Sitzunterteil befestigt ist und wobei eine Verbindungseinrichtung die Halterung mit dem Boden des Fahrzeugs verbindet, dadurch gekennzeichnet, das die Verbindungseinrichtung aus einem von der Halterung getragenen Riegel (10) und aus einem am Boden (5) schwenkbar gelagerten Schliesshaken (11) besteht, und dass eine gegen eine elastische Einrichtung wirkende Einrichtung (16, 20, 24 ; 16, 27, 29) den Schliesshaken (11) am Riegel hält, wenn die Lehne sich in Betriebsstellung befindet.

2. Sitzanordnung nach Anspruch 1, bei der die Halterung (8) in einer Ausnehmung angeordnet ist, die im hinteren mittleren Teil des Sitzunterteils (3) ausgebildet ist, dadurch gekennzeichnet, dass der Riegel der Verbindungseinrichtung aus einem Stab (10) besteht, der mit dem Beschlag (4) des Sitzunterteils fest verbunden und in der Ausnehmung (6) quer zum Fahrzeug angeordnet ist.

3. Sitzanordnung nach Ansprüche 1 und 2, dadurch gekennzeichnet, dass der Schliesshaken (11) mit einer gegenüber dem Boden (5) drehbar gelagerten Querstange (12) fest verbunden ist und dass die Einrichtung zum Halten des Schliesshakens (11) einen ersten Hebel (16) aufweist, der an einem Ende der Stange (12) befestigt und an dem ein zweiter Hebel (20 ; 27) angelenkt ist, der an seinem der Anlenkung gegenüberliegenden Ende eine Rolle (24, 29) trägt, die mit einer am Beschlag (2) der Lehne ausgebildeten Rampe (25) zusammenarbeiten soll.

4. Sitzanordnung nach Anspruch 3, dadurch gekennzeichnet, dass der zweite Hebel (20) aufweist : einen ersten Arm (19), der an einer Achse (21) angelenkt ist, die von einem am Boden (5) befestigten Halter (22) getragen wird, und einen die Rolle (24) tragenden Arm (23), und dass die elastische Einrichtung aus einer zwischen dem ersten Hebel (20) und dem Halter (22) angeordneten Feder (26) besteht.

5. Sitzanordnung nach Anspruch 3, dadurch gekennzeichnet, dass der zweite Hebel (27) in einer Führung (28) verschiebbar gelagert ist, die Teil eines am Boden befestigen Halters (22) ist, und dass die elastische Einrichtung aus einer zwischen der Anlenkung des zweiten Hebels (27) und dem Halter (22) angeordneten Feder (30) besteht.

6. Sitzanordnung nach einem der Ansprüche 2 bis 5, dadurch gekennzeichnet, dass die Halterung für Sicherheitsgurte für jeden Sicherheitsgurt einen Arm (7) aufweist, der mit einem Halterungsorgan (8) versehen und mit einer entsprechenden Platte (9) verbunden ist, und dass die Platten (9) von dem den Riegel bildenden Stab (10) getragen werden.

FIG.2

FIG.3

FIG.4

FIG.5

FIG.6

FIG.7

FIG.8